# EUROPEAN PATENT SPECIFICATION

(11) **EP 3 217 180 B1**
(45) Date of publication and mention of the grant of the patent: **17.11.2021**
(21) Application number: 16159744.8
(22) Date of filing: 10.03.2016
(51) Int. Cl.: G01N 35/00

(54) **QUALITY CONTROLS OF ANALYZERS FOR BIOLOGICAL SAMPLES**
QUALITÄTSKONTROLLE VON ANALYSATOREN FÜR BIOLOGISCHE PROBEN
CONTRÔLE QUALITÉ D'ANALYSEURS POUR DES ÉCHANTILLONS BIOLOGIQUES

(43) Date of publication of application: 13.09.2017
(73) Proprietor: F. Hoffmann-La Roche AG, 4070 Basel (CH); Roche Diagnostics GmbH, 68305 Mannheim (DE)
(72) Inventor: CALATZIS, Andreas, 80469 Munich (DE); DROSS, Felix, 35274 Kirchhain (DE)
(74) Representative: Peterreins Schley

(56) References cited:
- JP-A- 2009 036 515
- JP-A- 2015 135 282
- US-A1- 2006 129 345
- US-A1- 2011 301 917
- None

## Description

### Technical Field

This disclosure relates to methods for monitoring the performance of an analyzer for biological samples and automated analyzers for biological samples.

### Background

Automated or semi-automated analyzers for biological samples are employed in a variety of clinical or laboratory settings. Frequently, the results of the measurements performed by such automated or semi-automated analyzers can form the basis of medical decisions, e.g., diagnostic and/or therapeutic decisions of a medical practitioner. Therefore, automated or semi-automated analyzers usually have to undergo rigorous quality control procedures.

One example of such analyzers are devices for performing in vitro diagnostic (IVD) methods which are widely applied, e.g., to assist in diagnosing diseases or for monitoring the effect of treatments. In IVD devices (as well as in other automated or semi-automated analyzers for biological samples) quality controls are inserted periodically or in response to predetermined trigger events. These quality controls can mimic a particular type of biological sample. Quality controls can be obtained by either using an actual or artificial biological sample of the particular type with known properties. For instance, a quality control for an IVD device might consist in a quantity of blood or plasma from a healthy individual. In other examples, a quality control for an IVD device might consist in a quantity of blood or plasma from a healthy individual into which a particular substance, e.g., a drug or a metabolite of a drug, has been added.

Unfortunately, many bodily substances have a fairly limited shelf life. Consequentially, quality controls are in some examples prepared and frozen or freeze-dried at a vendor's site, shipped to a particular laboratory and then thawed or reconstituted shortly before they are used in a monitoring procedure.

The number of different types of quality controls required for properly monitoring the operation of particular automated or semi-automated analyzers for biological samples (e.g., an IVD device) can be fairly large. For instance, each particular assay of an automated or semi-automated analyzers might require one or more (e.g., "normal," "lightly abnormal" and "strongly abnormal") quality controls. Handling this number of quality controls (particularly in a just-in-time manner) can be fairly complex. In particular, preparing, including, e.g., freeze-drying, a number of different types of quality controls can be expensive. In addition, manually reconstituting the quality controls before use can be fairly time consuming, tedious and prone to errors.

As a consequence, carrying out required or desired monitoring procedures for automated or semi-automated analyzers for biological samples can bind a substantial amount of resources in a typical laboratory handling biological samples.

JP 2015-135282 A discloses an analyzer performing quality control measurements at predetermined intervals.

JP 2009-036515 A discloses another analyzer performing quality control measurements at predetermined intervals.

US 2006/0129345 A1 discloses a system in which a biometric quality control process application is configured to bias an imprecision for each test.

### Summary

A first general aspect of the present disclosure relates to a method according to claim 1 for monitoring the performance of an analyzer for biological samples having an automated preparation device including receiving an instruction that a monitoring procedure shall be executed, after receipt of the instruction that a monitoring procedure shall be executed, obtaining, by the automated preparation device, at least two quality control ingredients from a repository including a plurality of quality control ingredients, mixing, by the automated preparation device, the at least two quality control ingredients in a sample preparation receptacle to obtain a quality control which mimics the properties of a biological sample to be analyzed by the analyzer, the method further including determining at least one parameter of the quality control and determining a status of the analyzer based on the determined parameter of the quality control. One of the at least two quality control ingredients is a matrix and a second one of the quality control ingredients is a modifying agent. Either the modifying agent includes one or more of a drug, a metabolite of a drug, and a substance that accumulates in a predetermined medical or metabolic condition or the matrix is derived from blood plasma or is an artificial substance mimicking properties of blood plasma or blood serum.

A second general aspect of the present disclosure relates to an automated analyzer according to claim 12 for analyzing biological samples comprising a repository for storing a plurality of quality control ingredients for preparing quality controls, an automated preparation device configured to, after receipt of the instruction that a monitoring procedure shall be executed, obtain at least two quality control ingredients from the repository including a plurality of quality control ingredients and mix the at least two quality control ingredients in a sample preparation receptacle to obtain a quality control which mimics the properties of a biological sample to be analyzed by the analyzer and a measurement device configured to determine at least one parameter of the quality control and to determine a status of the analyzer based on the determined parameter of the quality control. One of the at least two quality control ingredients is a matrix and a second one of the quality control ingredients is a modifying agent. Either the modifying agent includes one or more of a drug, a metabolite of a drug, and a substance that accumulates in a predetermined medical or metabolic condition or the matrix is derived from blood plasma or is an artificial substance mimicking properties of blood plasma or blood serum.

The method of the first general aspect and the apparatus of the second general aspect can have one or more of the following advantages in some embodiments.

Firstly, quality controls can be prepared directly in an analyzer whose performance shall be monitored (or in a laboratory housing this analyzer). This can reduce a number of quality controls which have to be shipped to, stored at and eventually reconstituted in a laboratory hosting one or more analyzers which have to be monitored. In some examples, the quality controls are freeze-dried and then shipped to a destination laboratory in a freeze-dried form. Before use at the destination laboratory, the freeze-dried quality controls have to be reconstituted, which might be a relatively labor and time-intensive and error-prone process. In some examples, the techniques of the present disclosure can supersede handling freeze-dried quality controls (or at least reduce a number of freeze-dried items which have to be handled). This can free a substantial amount of resources in the laboratory environment.

Secondly, the quality controls can be prepared by a preparation device of the analyzer. For instance, some analyzers include a pipettor or other liquid handling unit which is adapted to automatically prepare samples according to a predefined recipe. Such pipettor can be used when employing the techniques according to the present disclosure to prepare quality controls for monitoring processes of the analyzer. In this manner, the techniques of the present disclosure can allow for a more efficient usage of laboratory equipment.

Thirdly, automatic preparation devices of analyzers (e.g., pipettors) can be fairly precise in some examples. This can improve the quality and reproducibility with which quality controls are produced in the analyzer compared to the manual reconstitution of freeze-dried controls by the user.

Fourthly, the quality controls can be prepared on demand when using the techniques of the present disclosure in some examples (e.g., directly before they are used in a performance monitoring procedure). This can reduce a period of storage of the quality controls. As many quality controls are not stable for an extended period of time, this can make handling quality more efficient and less costly.

Fifthly, a limited set of quality control ingredients can be used to prepare a variety of different quality controls in some examples. For instance, blood plasma or-in examples not forming part of the present invention - blood serum (i.e., a particular matrix) can be used as matrix for a large variety of quality controls for assays operating on blood serum or blood plasma samples. In the same manner, a particular drug metabolite (i.e., a modifying agent) can be used to prepare different levels of quality controls or can be combined with different matrices. This can reduce a number of items which have to be handled (e.g., supplied, stocked and reconstituted) in a laboratory.

Sixthly, the quality control ingredients can be stored in a liquid form (or in a different precursor form) that has a comparatively long shelf-life compared to the quality controls prepared from the quality control ingredients. For example, blood serum or blood plasma samples to which modifying agents have been added or which have been diluted might not be stable for a long time. In some examples, these matrices include proteins whose effect is impaired by added substances or dilution, and/or the added substances may be impaired, e.g. chemically transformed, by some matrix components. This means that these quality controls can be stored in their ready-to-use form only for a fairly limited amount of time. As a consequence, quality controls are stored in a freeze-dried form in some prior-art solutions. As discussed above, this can require fairly complex equipment and processes. At least some of the quality control ingredients according to the present disclosure, on the other hand, can be stored in liquid form. Thus, when using the techniques of the present disclosure, in some examples, stock-keeping of quality controls can be simplified.

Seventhly, the quality control ingredients can be handled in a similar manner as reagents used in the analyzers for performing analytical tests. For instance, the quality control ingredients can be prepared in disposable cassettes or containers which can be easy to handle outside and inside an analyzer.

Eighthly, the techniques of the present disclosure can be carried out in a completely automated fashion in some examples. An analyzer merely has to be stocked with a selected number of quality control ingredients and can then prepare quality controls for a large variety of performance monitoring procedures automatically. In particular, given a number of quality control ingredients, a larger number of quality controls can be at least in some cases prepared than the number of the quality control ingredients. This can be achieved for example by combining different quality control ingredients together and/or different amounts to obtain respective different concentrations of quality control ingredients, according to the particular need, thus eliminating the need to have all possible ready-to-use or ready-to-reconstitute quality controls in advance.

After having provided an overview over the techniques of the present disclosure, in the following paragraphs several terms will be discussed which are used in the present disclosure in a particular manner.

The term 'quality control' refers to any substance or composition that is used to monitor the performance of an analyzer for biological samples. The term 'quality control' is used in the present disclosure as referring to a physical sample used in one or several monitoring processes to monitor the performance of particular tests or assays of the analyzer. For instance, such test or assay can be a determination of a thrombin clotting time in which the time it takes is measured for a clot to form in the plasma of a blood sample containing anticoagulant after an excess of thrombin has been added. In this test, a quality control can include blood plasma as a first quality control ingredient (matrix) and thrombin as a second quality control ingredient.

The same particular quality control can be used to monitor the performance of a plurality of tests or assays of an analyzer in some examples. On the other hand, monitoring the performance of a particular test or assay of any analyzer might include different types of quality controls.

The term 'quality control' does not include reference samples the analyzer might prepare from a biological sample to be analyzed.

The term 'monitoring procedure' includes any process for monitoring the performance of a particular test (or a particular assay) an analyzer can perform on a biological sample. These tests or assays can include any clinical or laboratory test or assay on biological samples an analyzer might perform. A monitoring procedure can include determining one or more parameters of one or more quality controls.

A variety of tests or assays will be listed subsequently for the sake of illustration. In the preceding paragraphs a thrombin clotting time test or assay has been mentioned. In this example, one or more parameters of one or more quality controls mimicking a biological sample used in the thrombin clotting time test or assay can be determined as part of the monitoring procedure. In other examples, a test or assay can be a prothrombin time ('PT') test or assay evaluating an extrinsic pathway of coagulation. In still other examples, a test or assay includes partial thromboplastin time ('PTT') test or assay or an activated partial thromboplastin time ('aPTT' or 'APTT') being another medical test that characterizes blood coagulation. In still other examples, a test or assay can determine levels of fibrinogen, antithrombin, a von Willenbrand factor, a D-Dimer, rivaroxaban, heparin, dabigatran, a blood clotting protein (e.g., factor VIII or factor IX). In still other examples, a test or assay can determine a level of a drug or a drug metabolite, or a disease marker.

In still other examples, a test or assay can be adapted to detect an allergy marker (e.g., a particular antibody), an anemia marker (e.g., ferritin, folate or vitamin B12), a dependence causing substance (e.g., an amphetamine, a barbiturate, a benzodiazepine, a cannabinoid, cocaine, ethanol, lysergic acid diethylamide, methadone, methaqualone, an opiate, oxycodone, phencyclidine, propoxyphene), or a metabolite of the preceding dependence causing substances, an enzyme (e.g., ACP, ALT/GPT, ALP, a pancreatic enzyme, AST(GOT, cholinesterase, CK, CK-MB, GGT, GLDH, HBDH, lactate, or lipase), a growth hormone, a glycated hemoglobin, an immunosuppressant (e.g., cyclosporine, MPA, tacrolimus), an inflammation marker (e.g., anti-CCP), a specific protein (e.g., ALB, A1MG, ASLO, APOA, APOB, CERU, C3c, C4, CRP, hsCRP, CYSC, FERR, HAPT, IgA, IgG, IgM,, KAPPA, LAMBDA, LPA, MYO, PREA, RF, STfR, TRANS, AAGP, AAT, or B2MG), a substrate (e.g., albumin, ammonia, CO₂, bilirubin, blood urea nitrogen, calcium, cholesterol, creatinine, fructosamine, HDL cholesterol, homocysteine, iron, LDH, magnesium, phosphorus, tryglyceride, or uric acid), a therapeutic drug (e.g., acetaminophen, cyclosporine, MPA or tacrolimus), a thyroid hormone or protein (e.g., anti-TSHT, anti-Tg, anti-TPO, calcitonin, FT3, FT4, Tg, TSH, T4, or T3), a thyroid autoimmune disease marker (e.g., anti-TSHR, anti-Tg, or anti-TPO), or a thyroid cancer marker (e.g., calcitonin or Tg).

Further example tests or assays of analyzers for whose performance monitoring quality controls can be prepared by the techniques of the present disclosure are contained below.

The term 'quality control ingredient' includes any substance that can be a constituent of a quality control to be used to monitor the performance of a particular test of an analyzer for biological samples.

In one example, quality control ingredients can include a matrix (e.g., a matrix solution). These matrices can be derived from a bodily fluid or a constituent of a bodily fluid. In other examples, the matrix (e.g., matrix solution) can be an artificial substance which mimics properties of a bodily fluid or of a constituent of a bodily fluid. In some examples, the matrix (e.g., matrix solution) can include blood, saliva, ocular lens fluid, cerebrospinal fluid, sweat, urine, stool, semen, milk, ascites fluid, mucous, synovial fluid, peritoneal fluid, amniotic fluid, tissue, cultured cells, or constituents of these bodily substances. In other examples, the matrix can include a concentrated or diluted form of these bodily substances.

In one example, a matrix solution can be blood plasma or - in an example not forming part of the present invention - blood serum. In one example the matrix solution is freeze-dried. In one example only the matrix solution among the quality control ingredients is freeze-dried.

In addition or alternatively, quality control ingredients can include modifying agents (also referenced as 'modifiers' in the present disclosure). In some examples, a modifying agent can include one or more of a drug, a metabolite of a drug, a substance that accumulates in a predetermined medical or metabolic condition, a substance that is normally not present in a bodily fluid, and a substance that is normally present in a bodily fluid. For instance, a modifying agent can be heparin, hirudin, rivaroxaban, dabigatran, D-dimer, prothrombin, drugs or drug metabolites, enzymes, growth hormones, immunosuppressants, proteins, inflammation markers, substrates such as albumin, bilirubin, creatinine and disease markers.

In addition or alternatively, quality control ingredients can include diluents. For instance, diluents can be water, salt solutions (e.g., saline solutions).

In addition or alternatively, quality control ingredients can include stabilizers. In general, stabilizers can improve a stability of quality controls (e.g., a quality control including a particular matrix solution and one or more modifying agents). For instance, a stabilizer can be albumin, gelatin, a sugar or a salt.

In addition or alternatively, quality control ingredients can include reagents. The term 'reagent' refers to a substance which is added to a biological sample when performing a particular test on the biological sample in the analyzer to elicit a particular reaction in the blood sample. The reagents can be specific for a particular test or assay (e.g., the tests or assays discussed above). For example, in a situation where a partial thromboplastin time of a blood sample shall be determined, the analyzer can be configured to add an activator as reagent to the blood sample to activate the intrinsic pathway of coagulation. Particular substances can be 'modifying agents' or 'reagents' according to the present disclosure in different situations. In some examples, an analyzer might not add a reagent to a biological sample to be analyzed. Accordingly, a quality control might not include a reagent in some examples.

The terms 'analyzer' / 'analytical work cell' / 'analytical unit' as used herein encompass any apparatus or apparatus component that can measure analytical properties of a biological sample, e.g., following a reaction of a biological sample with a reagent for obtaining a measurement value.

An analyzer is operable to determine one or more parameters of a biological sample or a component thereof. For example, a parameter can be an absorption, transmittance or reflectance of the biological sample contained in a cuvette. In other examples, a parameter can be a fluorescence of a biological sample after having been illuminated with excitation light. Apart from the optical measurement devices of an analyzer discussed below (e.g., to determine an absorption, transmittance or reflectance), an analyzer can include measurement devices to determine a parameter of the sample via one or more chemical, biological, physical, or other technical procedures.

An analyzer may be operable to determine said parameter of the sample or of at least one analyte, process the determined parameter and return an obtained measurement value. The list of possible analysis results returned by the analyzer comprises, without limitation, concentrations of the analyte in the sample, a qualitative (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types.

An analytical work cell may comprise units for pipetting, dosing, and mixing of samples and/or reagents. The analyzer may comprise a reagent holding unit for holding reagents to perform the assays. Reagents may be arranged for example in the form of containers or cassettes containing individual reagents or group of reagents, placed in appropriate receptacles or positions within a storage compartment or conveyor. It may comprise a consumable feeding unit. The analyzer may comprise a process and detection system whose workflow is optimized for certain types of analysis. Examples of such analyzers are clinical chemistry analyzers, coagulation chemistry analyzers, immunochemistry analyzers, urine analyzers, hematology analyzers, nucleic acid analyzers, used to detect the result of chemical or biological reactions or to monitor the progress of chemical or biological reactions.

The term 'biological sample' refers to material(s) that may potentially contain an analyte of interest. The biological sample can be derived from any biological source, such as a physiological fluid, including blood, saliva, ocular lens fluid, cerebrospinal fluid, sweat, urine, stool, semen, milk, ascites fluid, mucous, synovial fluid, peritoneal fluid, amniotic fluid, tissue, cultured cells, or the like. The biological sample can be pretreated prior to use, such as preparing plasma from blood. Methods of treatment can involve centrifugation, filtration, distillation, dilution, concentration and/or separation of sample components including analytes of interest, inactivation of interfering components, and the addition of reagents. A biological sample may be used directly as obtained from the source or used following a pretreatment to modify the character of the sample. In some embodiments, an initially solid or semi-solid biological material can be rendered liquid by dissolving or suspending it with a suitable liquid medium. In some examples, the sample can be suspected to contain a certain antigen or nucleic acid.

### Description of the Drawings

**FIG. 1** is a schematic representation of different quality controls that can be generated by using quality control ingredients from a quality control ingredient repository according to the present disclosure.
**FIG. 2** is a schematic representation of an analyzer including an assembly adapted to prepare quality controls according to the present disclosure.
**FIG. 3** is a schematic representation of another analyzer including an assembly adapted to prepare quality controls according to the present disclosure.
**FIG. 4a** to **FIG. 10** are flow diagrams illustrating different methods for preparing quality controls according to the present disclosure.

### Detailed Description

Particular aspects of the methods for monitoring the performance of an analyzer for biological samples and automated analyzers for biological samples of the present disclosure will be discussed subsequently.

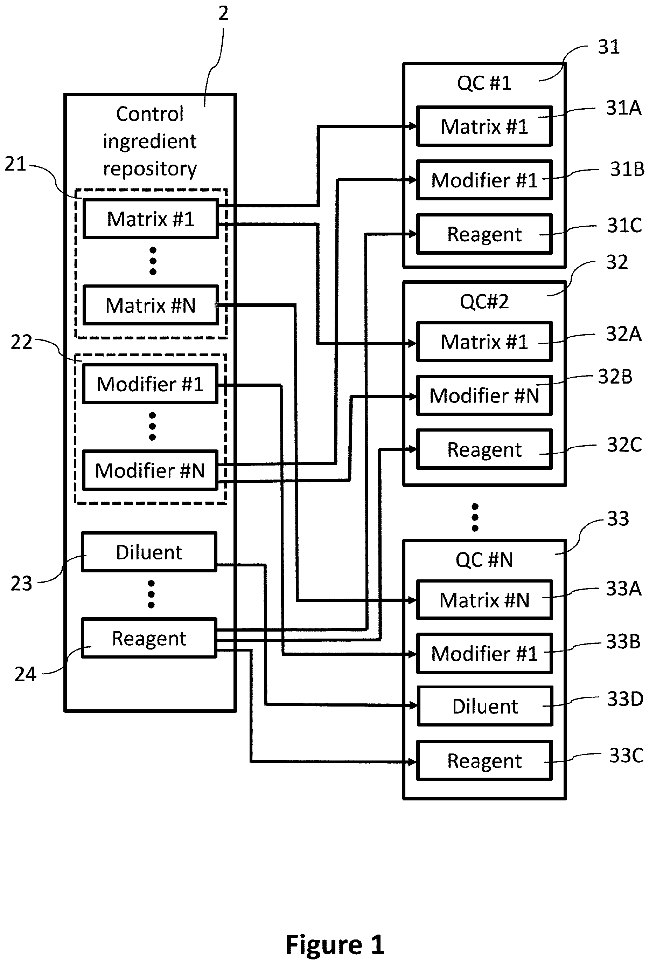

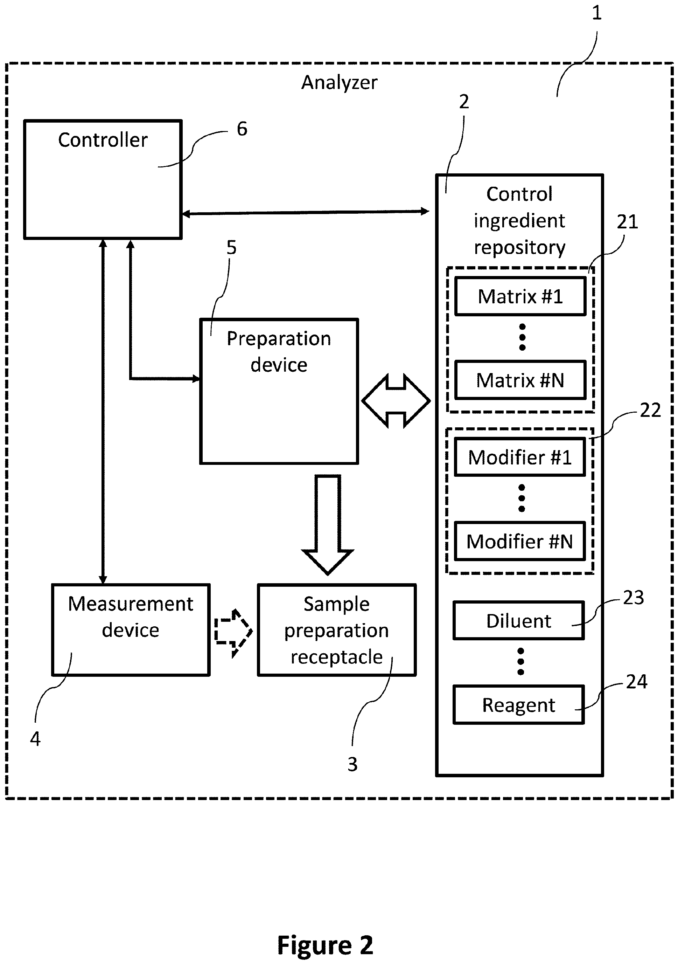

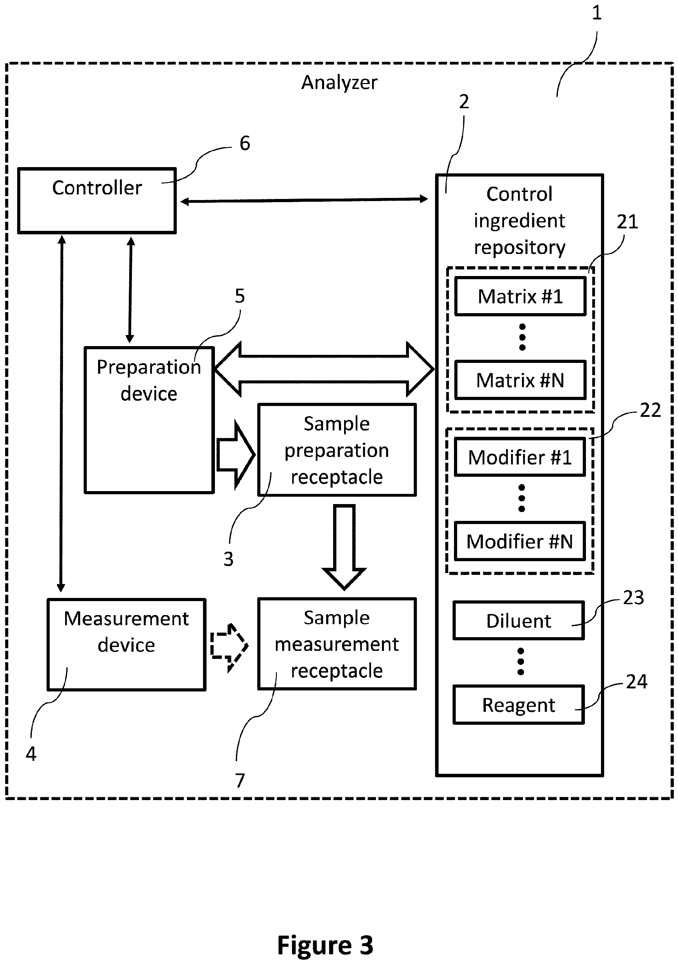

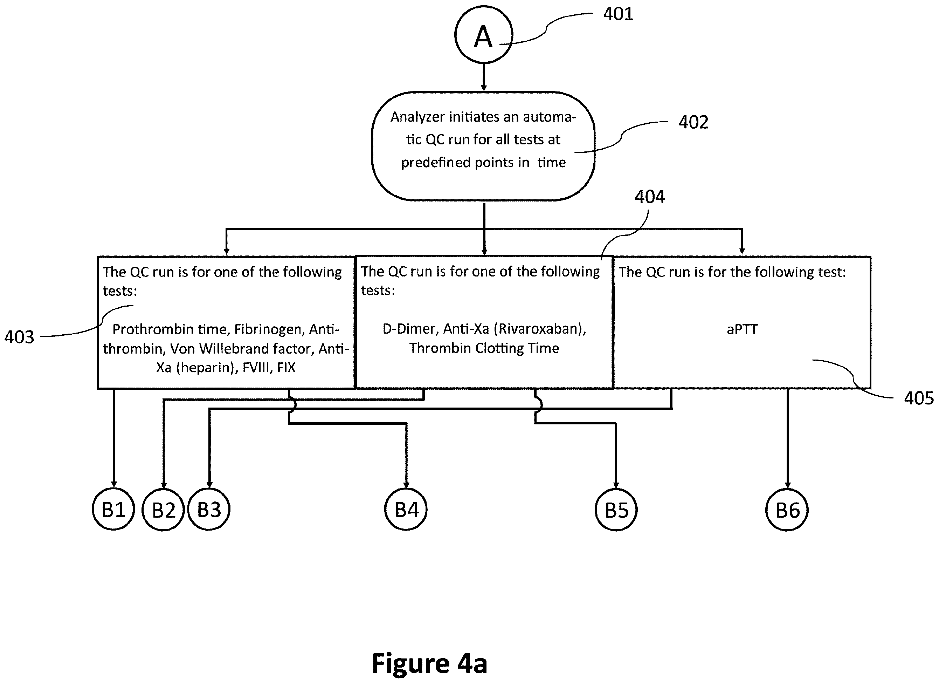

In connection with **FIG. 1** some aspects of the methods for monitoring the performance of an analyzer for biological samples according to the present disclosure will be discussed. Subsequently, in connection with **FIG. 2** and **FIG. 3****,** different aspects of automated analyzers according to the present disclosure having quality control preparation will be treated in more detail. Last, in connection with **FIG. 4a** to **FIG. 10****,** it will be shown how the techniques of the present disclosure can be used to implement complex quality control procedures.

**FIG. 1** illustrates a method for monitoring the performance of an analyzer for biological samples having an automated preparation device including receiving an instruction that a monitoring procedure shall be executed, after receipt of the instruction that a monitoring procedure shall be executed, obtaining, by the automated preparation device, at least two quality control ingredients from a repository 2 including a plurality of quality control ingredients 21, 22, 23 24, mixing, by the automated preparation device, the at least two quality control ingredients 21, 22, 23 24 in a sample preparation receptacle to obtain a quality control 31, 32, 33 which mimics the properties of a biological sample to be analyzed by the analyzer, the method further including determining at least one parameter of the quality control and determining a status of the analyzer based on the determined parameter of the quality control 31, 32, 33.

In the example of **FIG. 1****,** three different examples of quality controls 31, 32, 33 are shown. It can be seen that each quality control 31, 32, 33 includes a matrix 31A, 32A, 33A (e.g., a matrix solution) respectively, a modifying agent 31B, 32B, 33B respectively and a reagent 31C, 32C, 33C or a diluent 33D. The composition of the quality controls 31, 32, 33 of **FIG. 1** is purely illustrative. As explained above, a quality control can also include none or two or more different types of modifying agents. In addition or alternatively, a quality control can include none or two or more different types of matrices. In addition or alternatively, a quality control can include none or two or more different types of reagents and/or diluents.

In the following passages, examples of preparing quality controls in a liquid state from quality control ingredients in a liquid form will be discussed. However, the techniques for preparing quality controls of the present disclosure can equally be applied to prepare quality controls which are gaseous or solid, or handle quality control ingredients in a gaseous or solid form. For example, a test strip to which a modifying agent and a matrix are applied could be a quality control according to the present disclosure. In addition or alternatively, the quality control ingredients can be stored in the quality control ingredient repository in a solid and a gaseous form.

Coming back to the example of **FIG. 1****,** the first quality control 31 and the second quality control 32 might be liquid mixtures of the different quality control ingredients. The first quality control 31 can be a quality control required to monitor the performance of an analyzer when carrying out a first test or assay. Accordingly, the second quality control 32 can be a quality control required to monitor the performance of an analyzer when carrying out a second test or assay.

As can be seen, the first and second quality controls 31, 32 contain the same type of matrix solution 31A, 32A (e.g., blood plasma or - in an example not forming part of the present invention - blood serum) and the same type of reagent 31C, 32C. However, the modifying agents 31B, 32B of the first and second quality controls 31, 32 differ. The third quality control 33, on the other hand, includes the same type of modifying agent 33B as the first quality control 31 but a different type of matrix solution 33A. Accordingly, the quality control ingredient repository 2 can include matrix solutions 21, modifying agents 22, diluents 23 and reagents 24 which can be combined in different ways to prepare different quality controls in the analyzer. For example, different types of quality controls can be prepared by combining a set of quality control ingredients 21, 22, 23, 24 in different ways. In addition or alternatively, multiple instances of the same type of quality control can be prepared by using the same quality control ingredients from the quality control ingredient repository 2 multiple times. In this manner, a comparatively small stock of quality control ingredients can suffice to prepare a large variety of quality controls.

Further details regarding the methods for monitoring the performance of an analyzer for biological samples will be discussed below in connection with **FIG. 4a** to **FIG. 10****.** Next, automated analyzers for biological samples according to the present disclosure will be discussed in connection with **FIG. 2** and **FIG. 3****.**

**FIG. 2** is a schematic representation of an automated analyzer 1 for analyzing biological samples according to the present disclosure including a repository 2 for storing a plurality of quality control ingredients 21, 22, 23, 24 for preparing quality controls, an automated mixing device 5 configured to, after receipt of the instruction that a monitoring procedure shall be executed, obtain at least two quality control ingredients 21, 22, 23, 24 from the repository 2 and mix the at least two quality control ingredients 21, 22, 23, 24 in a sample preparation receptacle 3 to obtain a quality control which mimics the properties of a biological sample to be analyzed by the analyzer and a measurement device 4 configured to determine at least one parameter of the quality control and to determine a status of the analyzer based on the determined parameter of the quality control.

In the example of **FIG. 2****,** the analyzer 1 also includes a controller 6 which is configured to control the quality control preparation and analysis process. In particular, the controller 6 controls the operation of the quality control ingredient repository 2, the preparation device 5, and the measurement device 4. In other examples, the controller 6 can be external to the analyzer 1 (e.g., a controller arranged remotely from the analyzer 1). For instance, a central controller can be provided in a laboratory to control multiple analyzers and other pieces of laboratory equipment.

The controller 6 can be configured to control the different devices of the analyzer 1 to carry out the operations according to any one of **FIG. 4a** to **FIG. 10****.**

The additional devices of the analyzer 1 will be discussed in the subsequent sections.

The preparation device 5 can be any device of an analyzer configured to automatically handle or prepare biological samples or reagents in the analyzer 1. In the following sections, a pipettor will be used as example automated preparation device. However, in other examples the automated preparation device 5 can have different forms. For instance, the automated preparation device can include a robotic gripper adapted to manipulate the quality control ingredients. In still other examples, an automated preparation device can be a dispenser or a sprayer configured to dispense quality control ingredients into a sample preparation receptacle. As can be seen, the automated mixing device can have many different forms.

In the example where the automated preparation device 5 includes a pipettor, the pipettor can be configured to sample a quality control ingredient 21, 22, 23, 24 from a container of the quality control ingredient repository 2 and dispense the quality control ingredient 21, 22, 23, 24 into the sample preparation receptacle 3. In the same manner, the pipettor can be configured to sample a second quality control ingredient 21, 22, 23, 24 (and optionally one or more additional quality control ingredient 21, 22, 23, 24) from the quality control ingredient repository 2 and dispense it into the sample preparation receptacle 3. In this manner, a quality control for a particular test and assay of the analyzer can be mixed in the sample preparation receptacle 3.

In some examples, the pipettor 5 (or other automated preparation device) can be a dedicated device for preparing quality controls. In other examples, the pipettor 5 can be a pipettor of the analyzer configured to automatically handle biological samples which are analyzed in the analyzer and/or reagents used in the analysis processes. In other words, an automated pipettor 5 of the analyzer can have a dual use for sample preparation and quality control preparation. In some examples, the automated pipettor can include a plurality of pipette heads. A first pipette head or group of the pipette heads can be configured to handle biological samples and/or reagents to be used in the analysis process. A second pipette head or group of pipette heads can be used to handle quality controls and/or quality control ingredients.

In addition or alternatively, the pipettor can be configured to avoid that the same pipette head is used for handling a particular combination of biological samples and/or reagents and quality control ingredients (in order to avoid contamination of samples or quality controls or to ensure that a quality control can be prepared independently of the measurement process). In addition or alternatively, the pipettor can be configured to use disposable or washable pipette tips to handle the quality control ingredients. In this manner, the same pipette head can be employed to handle different substances.

Even though the above discussion explained different properties of an automated sample preparation device 5 using a pipettor as an example, alternative automated preparation devices can also have the above discussed features (unless they are specific for a pipettor).

The quality control ingredient repository 2 will be discussed next. As shown in **FIG. 2****,** the quality control ingredient repository 2 can be internal to the analyzer 1 whose performance shall be monitored by means of the quality controls prepared using the quality control ingredients 21, 22, 23, 24 stored therein. However, in other examples the quality control ingredient repository 2 can be located externally to the analyzer (and can be accessible by the automated preparation device 5). For instance, multiple analyzers can share a single quality control ingredient repository 2.

The quality control ingredient repository 2 can include a plurality of different quality control ingredients 21, 22, 23, 24 required for the preparation of a variety of different quality controls (see, e.g., the example quality controls discussed above and below in connection with **FIG. 4a** to **FIG. 10****).** In other examples, the quality control ingredient repository 2 can be configured to include only the quality control ingredients 21, 22, 23, 24 required for preparing one particular quality control (e.g., a quality control required for a subsequent monitoring procedure). In the same manner, the quality control ingredient repository 2 can be configured to include only the quality control ingredients 21, 22, 23, 24 required for preparing two or more particular quality controls required for a subsequent monitoring procedure.

In some examples, the quality control ingredient repository 2 can be integral part of a repository also holding reagents used in analysis procedures on biological samples in the analyzer. In these examples, the automated preparation device 5 can handle the quality control ingredients in the same manner as the reagents.

A short discussion of the configuration of the quality control ingredient repository 2 will be given next. In general, the quality control ingredients 21, 22, 23, 24 can be stored in the control ingredient repository 2 in any suitable form. In some examples, at least some of the quality control ingredients 21, 22, 23, 24 can be stored in the control ingredient repository 2 in a liquid form. For instance, at least some of the matrices 21 can be stored in the quality control ingredient repository 2 as matrix solutions 21A, 21B. In other examples, the matrices 21 can be stored in the quality control ingredient repository 2 in a lyophilized form. Matrices in a lyophilized form can be brought into a liquid form (reconstituted) by adding another quality control ingredient, e.g. a diluent 23, as part of the sample preparation process.

In addition or alternatively, modifying agents 22 can be stored in a liquid form in the quality control ingredient repository 2.

The quality control ingredients 21, 22, 23, 24 can be contained in any suitable receptacle (e.g., a container, a can, a cuvette, a tube, a cartridge or a bottle).

In one example, the receptacle can be disposable and contain a particular quality control ingredient for preparing one or more instances of a particular quality control (e.g., a disposable container, can, cuvette, tube, cartridge or bottle). In other examples, a disposable receptacle can contain a set of quality control ingredients for preparing one or more instances of a particular quality control.

In still other examples, the quality control ingredients can be provided as a kit of receptacles (e.g., disposable receptacles) including quality control ingredients (e.g., all quality control ingredients) required for a particular type of monitoring procedure. In other examples, the quality control ingredients can be provided as a kit of receptacles (e.g., disposable receptacles) including quality control ingredients (e.g., all quality control ingredients) required for a particular group of monitoring procedures. For example, a kit might include one or more receptacles including one or more matrices (e.g., in liquid or lyophilized form) and one or more modifying agents needed to prepare one or more quality controls for one or more monitoring procedures of an analyzer. The kit of receptacles can also include directions for use of the items of the kit.

In other examples, the quality control ingredients are provided in the same type of receptacles as the reagents used in the analyzer in the course of the analysis processes carried out by the analyzer.

As shown in **FIG. 2****,** the automated preparation device 5 dispenses the quality control ingredients into the sample preparation receptacle 3. The sample preparation receptacle 3 can have any suitable form for preparing the quality controls. For instance, the sample preparation receptacle 3 can be a cuvette, a tube, a dish or a bowl. In still other examples, the preparation receptacle 3 can be a substrate on which quality control ingredients can be mixed (e.g., a microscope slip or test strip or another substrate).

The sample preparation receptacle 3 can be a disposable sample preparation receptacle in some examples. In other examples, the sample preparation receptacle 3 can be reusable (e.g., washable).

In the example of **FIG. 2****,** the sample preparation receptacle 3 is at the same a time a test receptacle. This means that the measurement device 4 can determine one or more parameters of the quality control while the quality control is contained in the sample preparation receptacle 3. Other examples will be discussed in connection with **FIG. 3** below.

In one example, the sample preparation receptacle 3 can be placed at the same position as a receptacle for biological samples to be analyzed. In these examples, the measurement device 4 can determine one or more parameters of the quality control in the same setup which is used for analyzing biological samples.

For instance, an analyzer might include a plurality of cuvettes (or other receptacles) into which biological samples and/or reagents can be dispensed by the automated preparation device 5. In one example, the analyzer 1 is configured to prepare one or more quality controls as described in the present disclosure in one or more of the plurality of cuvettes (or other receptacles). Subsequently, the measurement device can be used to determine one or more parameters of the quality controls.

The measurement device 4 will be shortly discussed in the following passage. In general, the nature of the measurement device 4 is immaterial for the techniques of the present disclosure. The methods for monitoring the performance of an analyzer can be carried out regardless of the nature of the measurement device 4.

In some examples, the measurement device 4 is an optical measurement device. For example, the measurement device 4 can be a photometer configured to determine at least one parameter of the quality control by a transmission and/or reflectance measurement. In addition or alternatively, the measurement device 4 can be an optical measurement device configured to collect fluorescent light from the quality control to determine one or more parameters of the quality control. In still other examples, the measurement device 4 can include one or more cameras configured to take images of the quality control. The measurement device 4 can then determine one or more parameters of the quality control based on the images taken by the one or more cameras.

After a first example analyzer has been discussed in connection with **FIG. 2****,** a variant of the analyzer of **FIG. 2** will subsequently be discussed in connection with **FIG. 3****.** Several elements are identical in the analyzers of **FIG. 2** and **FIG. 3****.** The description of these elements will not be repeated.

The difference between the analyzers of **FIG. 2** and **FIG. 3** is that the analyzer 1' of **FIG. 3** includes a sample preparation receptacle 3 separate from a sample measurement receptacle 7. The sample preparation receptacle 3 can be used as described in connection with **FIG. 2** above to prepare quality controls.

However, the quality controls are then transferred into the sample measurement receptacle 7 to determine one or more parameters of a respective quality control. In some examples, one or more reagents can be added (e.g., by the automated sample preparation device) to the sample measurement receptacle 7. In still other examples, a quality control can be prepared in a quality control ingredient receptacle and then transferred to be used in a monitoring procedure. For instance, a particular quality control ingredient receptacle can include a first quality control ingredient. Then, one or more additional quality control ingredients can be added by the preparation device to prepare a quality control. This quality control can then be transferred to a sample measurement receptacle.

In one example, the sample preparation receptacle 3 can include a plurality of receptacles (e.g., cups or cuvettes) in which a set of quality controls can be prepared at the same time (or sequentially). For instance, a first quality control can include a matrix solution but no modifying agent (e.g., a "normal" quality control). A second quality control can include the same matrix solution and a first predetermined quantity of a modifying agent (e.g., a first "abnormal" quality control). In addition, a third quality control can include a second predetermined quantity of the modifying agent larger than the first quantity (e.g., a second "abnormal" quality control). The analyzer can be configured to determine one or more parameters of all three quality controls on a monitoring procedure.

In another example, the analyzer can be configured to prepare two or more quality controls including two or more differing concentrations of a diluent. Again, the analyzer can be configured to determine one or more parameters of the two or more quality controls on a monitoring procedure.

Additional aspects of how quality controls can be prepared and used in monitoring processes will now be discussed in connection with **FIG. 4a** to **FIG. 10****.** In the examples of **FIG. 4a** to **FIG. 10****,** the analyzer is a coagulation analyzer using an optical measurement device. However, as already set out in the summary section above, the analyzer can be any type of analyzer for biological samples and the measurement device can be any type of measurement device. The features described herein in connection with a coagulation analyzer having an optical measurement device in connection with **FIG. 4a** to **FIG. 10** can also be applied to other types of analyzers (unless the respective features is specific to a coagulation analyzer). For instance, the analyzer can be an immunochemistry analyzer or a clinical chemistry analyzer.

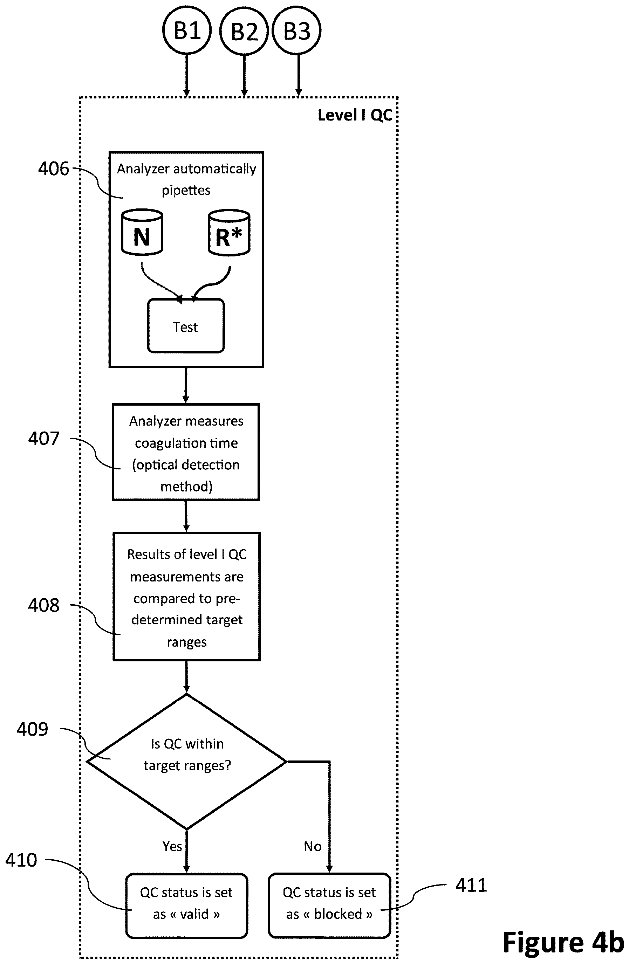

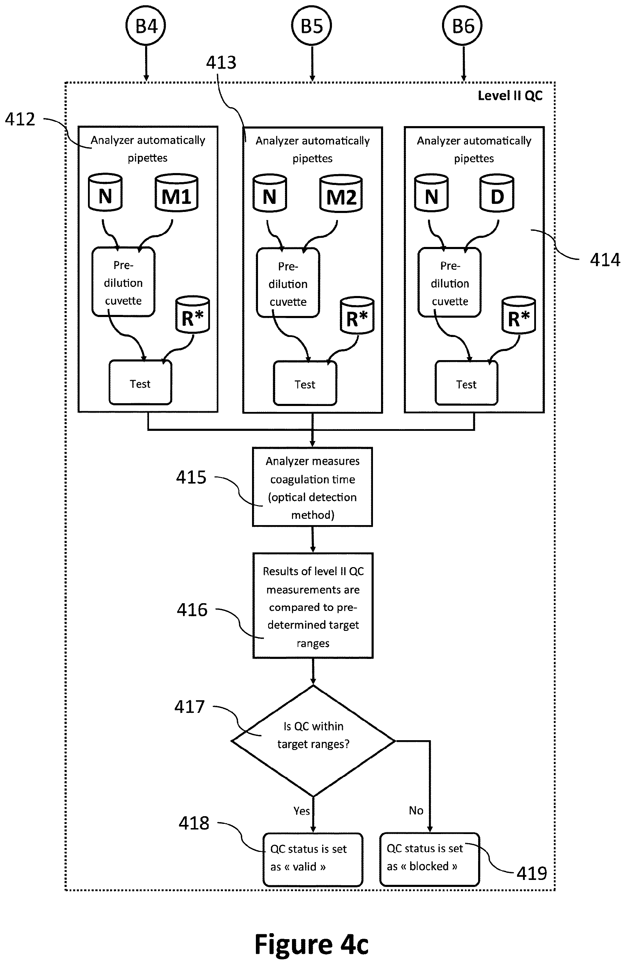

**FIG. 4a****,** **FIG. 4b** and **FIG. 4c** illustrates a first complex monitoring procedure (also referenced as 'quality control run' in connection with **FIG. 4a** to **FIG. 10****)** including the preparation of different quality controls according to the present disclosure.

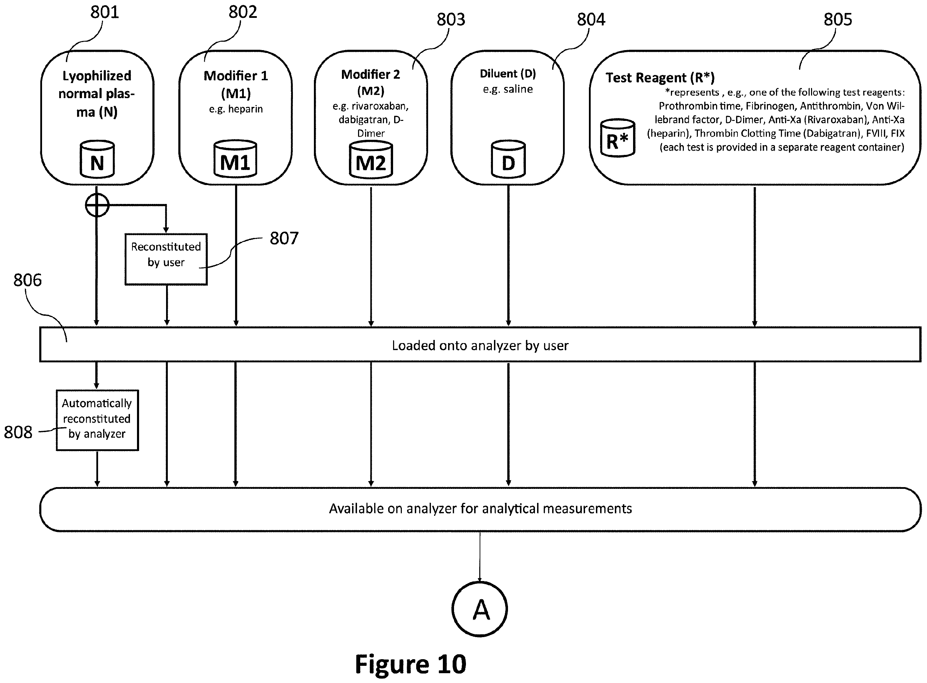

The process starts at 401 with an analyzer having a stocked control ingredient repository 2. Different aspects of the stocking process of the control ingredient repository 2 are discussed in connection with **FIG. 10** below.

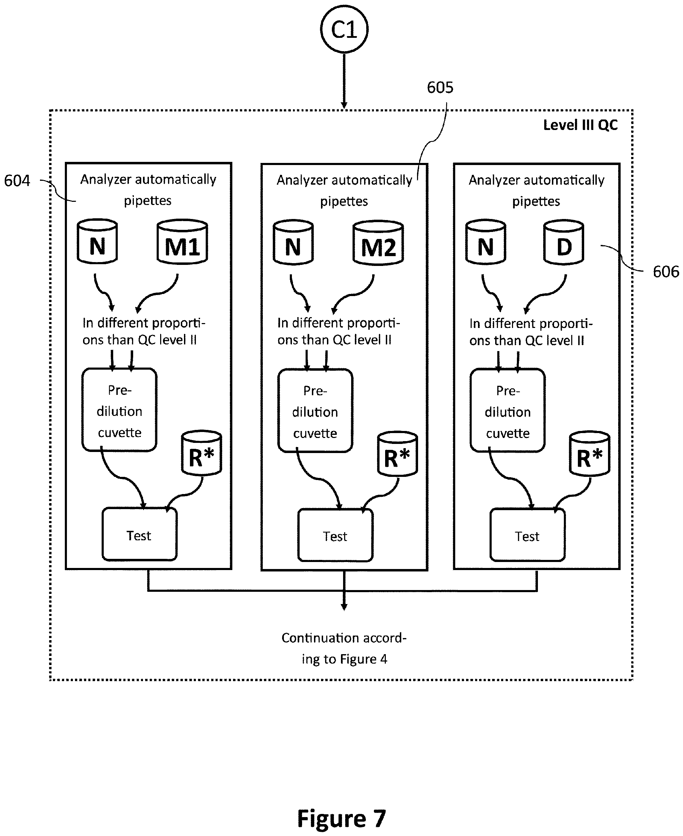

For the sake of illustration, in the example of **FIG. 4a** to **FIG. 10** the control ingredient repository 2 includes the following quality control ingredients: Reconstituted normal blood plasma (e.g., taken from a healthy individual, labelled as 'N' in **FIG. 4b****,** **FIG. 7****,** **Fig. 8** and **FIG. 10**) as matrix solution, a heparin solution as first modifying agent (labelled as 'modifier 1' or 'M1' in **FIG. 7****,** **Fig. 8** and **FIG. 10**)**,** a solution containing rivaroxaban, dabigatran and D-dimer as second modifying agent (labelled as 'modifier 2' or 'M2' in **FIG. 7****,** **Fig. 8** and FIG. **10** ), a plurality of reagents for different tests or assays of the analyzer (i.e., for tests to determine or detect prothrombin time, aPTT, antihrombin, D-dimer, fibrinogen, thrombin clotting time, heparin anti-Xa activity, rivaroxaban anti-Xa activity, von Willebrand factors, factor VIII or factor IX, labelled as 'R^{∗}' in **FIG. 4b****,** **FIG. 7****,** **Fig. 8** and **FIG. 10**) and saline as a diluent. However, the methods described below can be also used with any other suitable matrix, modifying agent, reagent and diluent and in particular the other matrices, modifying agents, reagents and diluents described in the present disclosure.

At 402, a monitoring procedure (also referenced as quality control 'QC' in connection with **FIG. 4a** to **FIG. 10**) is initiated. In the example of **FIG. 4a**, the monitoring procedure is initiated at predefined points in time (in other words, the monitoring procedures are started according to a schedule). For instance, the monitoring procedure can be started daily at a predetermined time or at multiple predetermined times each day (e.g., at 8am, 2pm and 10pm in one example). Even though **FIG. 4a** to **FIG. 4c** describe initiating a particular monitoring procedure according to a schedule this initiating technique can also be applied to all other monitoring procedures of the present disclosure.

As shown in **FIG. 4a**, the monitoring procedure can be initiated automatically by the analyzer at the scheduled time. Other techniques and trigger events will be discussed below.

The monitoring procedure of **FIG. 4a** to **FIG. 4c** is designed to monitor the analyzer's performance when carrying out a plurality of tests or assays related to coagulation (i.e., tests or assays determining or detecting prothrombin time, aPTT, anithrombin, D-dimer, fibrinogen, thrombin clotting time, heparin anti-Xa activity, rivaroxaban anti-Xa activity, von Willebrand factors, factor VIII or factor IX).

The tests or assays related to coagulation are split in three different groups 403, 404, 405: For each group of tests or assays 403, 404, 405 a 'level 1 quality control run' and a 'level 2 quality control run' are performed. This will be discussed in more detail in connection with **FIG. 4b** and **FIG. 4c**.

Starting with **FIG. 4b****,** a 'level 1 quality control run' is performed by the analyzer. In the course of this monitoring procedure at 406, the automated sample preparation device (e.g., pipettor) of the analyzer dispenses the matrix solution and a respective reagent (e.g., a reagent for a test or assay to detect van Willebrand factors) in a test cuvette ('test' in **FIG. 4b**) to prepare a quality control. This preparation step is executed in a similar manner as a preparation step of an actual biological sample to be analyzed by the analyzer.

In a further step 407, the analyzer measures the coagulation time by using an optical detection method (e.g., a photometer). Thus, in the example of **FIG. 4b** the coagulation time is determined as parameter of the quality control. Again, the particular detection method is immaterial for the methods discussed in connection with **FIG. 4a** to **FIG. 10** and can be a different detection method (using a different measurement device) in other examples. Subsequently, at 408, the analyzer determines if the determined parameter of the quality control is in a predetermined range. In other examples, the analyzer can determine if the determined parameter lies above or below a predetermined threshold. In still other examples, the analyzer can determine if the parameter fulfills a predetermined criterion. In all examples, the predetermined ranges, thresholds or criteria can be selected to be indicative of a proper function of the analyzer.

For instance, coagulation time might be expected to lie with a predetermined range for biological samples. If coagulation time is out of this range this can be indicative of an analyzer malfunction. This can be detected by monitoring procedures according to the present disclosure.

At 409, 410 and 411, depending on the result of the comparison of the detected parameter with the predetermined range a status of the analyzer is determined. In the example of **FIG. 4a****,** the status can either be 'valid' if the parameter of the quality control lies within the predetermined range or 'blocked' if this not the case.

The consequences of this status determination can differ. In one example, an analyzer might continue with analyzing biological samples if all monitoring procedures yield that the status is valid. In other examples, the analyzer might continue with analyzing biological samples by using a particular test or assay if the monitoring procedures using corresponding quality controls yield that the status is valid. On the other hand, the analyzer might refrain from analyzing biological samples if one monitoring procedure yield that the status is blocked. In other examples, the analyzer might refrain from analyzing biological samples by using a particular test or assay if the monitoring procedures using corresponding quality controls yield that the status is blocked.

In addition or alternatively, the analyzer can prompt an error message to an operator if the status of the analyzer is set to a particular level (e.g., blocked). In addition or alternatively, the analyzer might initiate one or more self-diagnostic tests if the status of the analyzer is set to a particular level (e.g., blocked). In still other examples, the analyzer can initiate a predetermined set of further monitoring procedures if the status of the analyzer is set to a particular level (e.g., blocked).

In the examples of **FIG. 4a** to **FIG. 10** the analyzer can have two different status levels. However, in other examples the analyzer can have more than two status levels. For example, different status levels can indicate a degree of deviation from a predetermined range or a predetermined threshold. In other examples, different status level can indicate that a predetermined parameter is within a predetermined range or below/above a predetermined threshold but is within a predetermined margin of the boundaries of the range or the threshold. In still other examples, different status levels might indicate a degree of change compared to a previous monitoring procedure involving a particular quality control.

In addition or alternatively, a status of the analyzer might be general (e.g., for all tests or assays carried out by the analyzer) or might be set on a per-test or per-assay level. Irrespective of the particular status levels, in response to setting the analyzer to a particular status level different actions might be triggered. For instance, a status message might be prompted to an operator and/or additional self-diagnostic tests might be triggered.

Coming back to **FIG. 4a****,** the test procedure cycles through the process described in **FIG. 4a** for a plurality of reagents used in the predetermined tests or assays of the analyzer.

In a second sub-step of the monitoring procedure, the analyzer performs level 2 quality control runs as shown in **FIG. 4c****.** In general, while level 1 quality control runs only involved quality controls including a matrix solution and a reagent, the level 2 quality control runs also involve quality controls to which modifying agents are added.

As can be seen at 412, 413, 414, the preparation device of the automated analyzer prepares different quality controls: A first quality control preparation process involves adding a first modifying agent (M1) to the matrix solution. A second quality control preparation process involves adding a second modifying agent (M2) to the matrix solution. In a third quality control preparation process a diluent (D) is added to the matrix solution.

Each of these three quality controls is mixed in a predilution cuvette as sample preparation device (as described above in connection with **FIG. 2** and **FIG. 3**). Subsequently, the quality control is transferred to a test cuvette (or other suitable receptacle). While the quality controls are contained in a respective test cuvette, a reagent is added by the automated preparation device.

In subsequent steps 415-419, each of the quality controls undergoes a parameter determination process and status determination process as discussed above for the level 1 quality control runs in connection with **FIG. 4a****.** The analyzer status levels in response to the results of the measurements on the level 2 quality controls can be the same ones or different ones than the levels in response to the results of the measurements on the level 1 quality controls.

The analyzer performs level 2 quality control run for each test or assay in the predetermined set of tests and assays and then concludes the monitoring procedure. At a subsequent scheduled time, the monitoring procedure can be initiated anew.

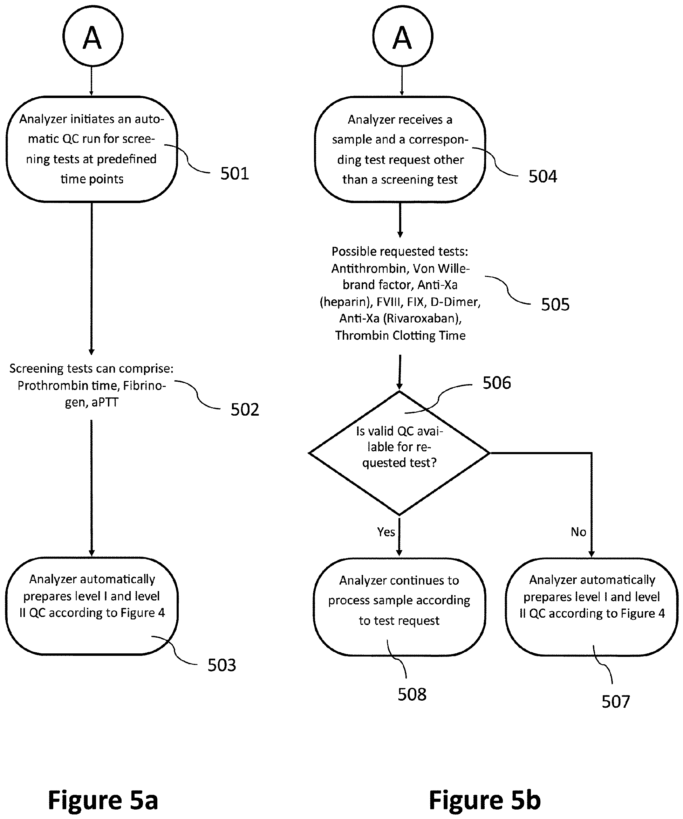

As already discussed, the monitoring procedures of the present disclosure can be varied in different ways. In connection with **FIG. 5a** and **FIG 5b** examples of such variations will be discussed in the subsequent passages.

The monitoring procedure of **FIG. 5a** and **FIG 5b** includes a first set 502 of tests or assays (see **FIG. 5a****)** for which a monitoring procedure is initiated according to a schedule or at predefined points in time. In one example, the first set 502 of tests or assays can include tests or assays which are more frequently performed on the analyzer (e.g., screening tests) than other tests or assays (e.g., specific tests in the course of a particular diagnostic or therapeutic procedure). The monitoring procedure of the first set of tests or assays is initiated 501 at a predetermined point in time. In some examples, the analyzer can then run through the monitoring procedures described in connection with **FIG. 4a** to **FIG. 4c****.**

In addition, the monitoring procedure of **FIG. 5a** and **FIG 5b** includes a second set 505 of tests or assays (see **FIG. 5b****)** for which a monitoring procedure is initiated on demand or upon receipt of a predetermined trigger event.

For instance, the trigger event can be detection 504 that a particular test or assay shall be executed by the analyzer (or that a particular biological sample is provided to the analyzer).

In other examples, a trigger event can be a user command that a particular monitoring procedure shall be carried out. In still other examples, a trigger event can be detection that a particular reagent is stored on the analyzer or that a new lot of reagents is stored on the analyzer. These trigger events are not limited to be used in the particular method of **FIG. 5a** and **FIG 5b** but can also be applied in all other monitoring procedures of the present disclosure.

In an optional step 506, the analyzer can determine if a valid result of a monitoring procedure is available for the particular test or assay. For instance, a valid result of a monitoring procedure can include a result of a monitoring procedure for the particular test or assay which is not older than a predetermined threshold time.

If a valid result of a monitoring procedure is available for the particular test or assay, the monitoring procedure ends 508 (and, e.g., the biological sample can be analyzed by the analyzer).

If no valid result of a monitoring procedure is available for the particular test or assay, a monitoring procedure can be initiated for the particular test or assay 507 (e.g., the monitoring procedure described in connection with **FIG. 4a** to **FIG. 4b** or another monitoring procedure). Depending on the result of the monitoring procedure, a status of the analyzer is set accordingly.

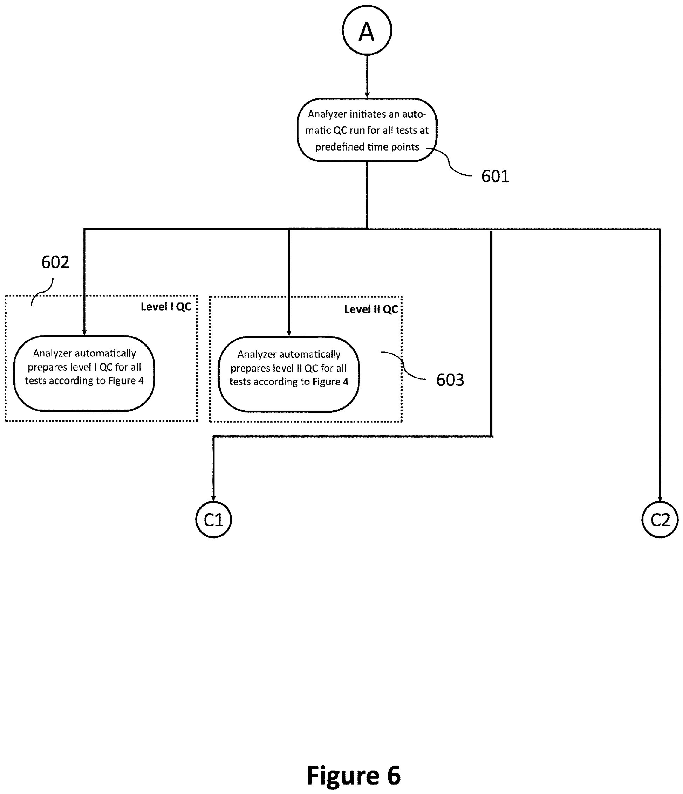

A further example monitoring procedure is illustrated in connection with **FIG. 6** to **FIG. 8****.** In this example, the analyzer initiates a monitoring procedure at a predetermined point in time 601.

Then, the analyzer can carry out for a particular set of tests or assays the monitoring procedures described in connection with **FIG. 4a** to **FIG. 4c** 602, 603.

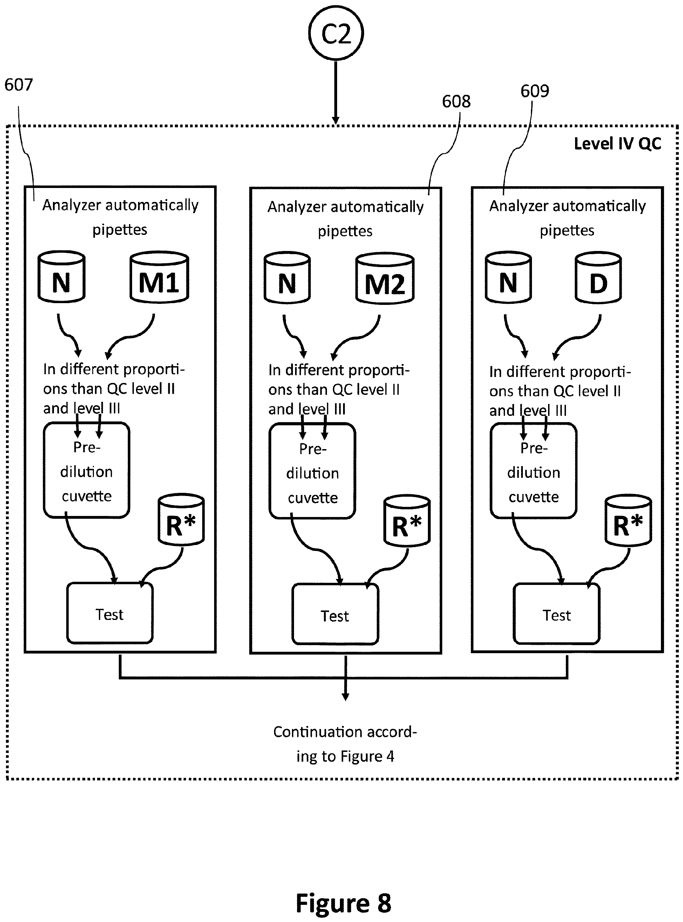

Additionally, the monitoring procedure of **FIG. 6** to **FIG. 8** includes a level 3 quality control run (see **FIG. 7**) and a level 4 quality control run (see **FIG. 8**)**.** Both the level 3 quality control run and the level 4 quality control run are performed by the analyzer in a similar manner as the level 2 quality control run described in connection with **FIG. 4c** above. However, an amount of modifying agents and diluent added to the quality control is different for a respective level 2, 3 and 4 quality control run. For instance, an amount of modifier added might be lower for a level 2 quality control run, higher for a level 3 quality control run and still higher for a level 4 quality control run. In addition, a diluent concentration might be varied between the different quality control runs.

In general, monitoring procedures might include any number and/or combination of quality control runs in the methods of the present disclosure. For instance, a concentration of one or more modifying agents can be varied in a plurality of quality controls (e.g., in four or more or five or more quality controls). In addition or alternatively, two or more modifying agents or matrices can be combined in one or more different combinations.

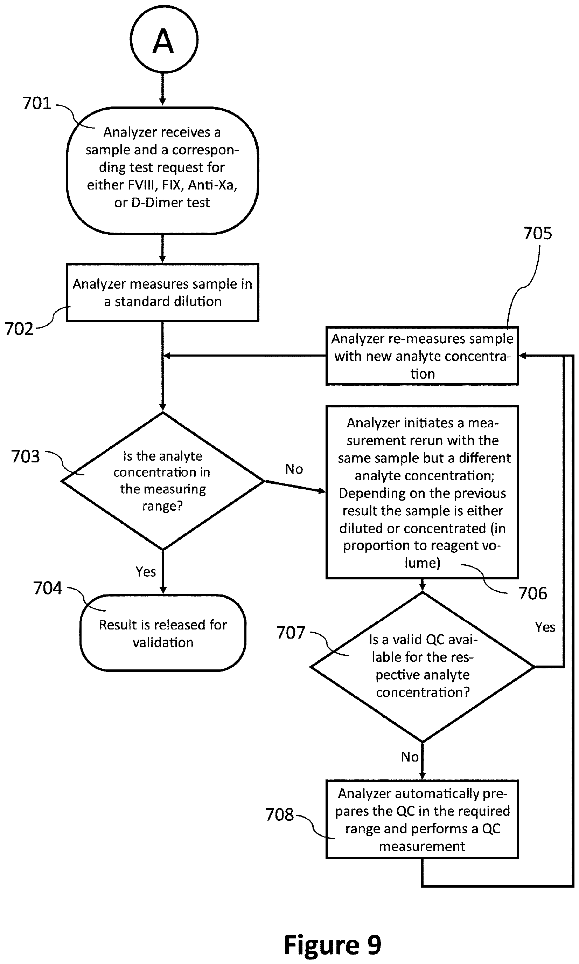

**FIG. 9** depicts still another monitoring procedure according to the present disclosure. In the example of **FIG. 9****,** the monitoring procedure is triggered by detecting 703, 706 that a parameter measured on a biological sample is out of a predetermined range (or below or above a predetermined threshold).

In one example, the process starts with the receipt 701 of a particular test or assay request. In a first optional step 702, the analyzer measures a parameter of the biological sample using a first set of measurement parameters (e.g., a first dilution level of the biological sample).

In a subsequent step 703, the analyzer determines a particular parameter of the biological sample and determines if the parameter meets a predetermined criterion (e.g., lies within a predetermined range or below or above a predetermined threshold). If this is the case, the measurement result can be released at 704.

However, if the parameter of the biological sample does not meet the predetermined criterion, the analyzer can carry out one or more additional measurements 706 on the biological sample with a second set of measurement parameters different from the first set of measurement parameters. For instance, the analyzer can dilute or concentrate the biological sample and rerun the measurement.

In a further optional step 707, the analyzer can determine if a valid quality control result is available for the second set of measurement parameters (e.g.., as explained in connection with step 506 in **FIG. 5b** above).

If this is the case, the analyzer can rerun the test or assay with the second set of measurement parameters 705.

However, if this is not the case, the analyzer can perform a monitoring procedure for the particular test or assay according to the present disclosure at step 708. Depending on the result of this monitoring procedure and the status of the analyzer, the analyzer might then proceed to rerunning the test or assay on the biological sample. This concludes the method of **FIG. 9****.**

In general, all monitoring procedures of the present disclosure can be performed automatically (i.e., without user intervention) unless an intervention of a user is explicitly mentioned (e.g., a user initiating a particular monitoring procedure). In particular, the preparation of the quality controls required in the monitoring procedures can be performed automatically by an analyzer in the methods of the present disclosure.

All automated techniques of the present disclosure can be encoded in instructions on a computer-readable medium or in an electronic signal. The computer-readable medium or the electronic signal can include instructions which when executed by a controller of an analyzer cause an analyzer to perform the operations of the methods described herein.

In some examples, an automated analyzer might already be equipped with the hardware required to carry out the monitoring procedures of the present disclosure. In this situation, the analyzer can be empowered to carry out the monitoring procedures of the present disclosure by a software or firmware update.

Last, in connection with **FIG. 10****,** a process of stocking a quality control ingredient repository according to the present disclosure will be discussed.

As already described in detail, different matrices 801, modifying agents 802, 803, diluents 804 and reagents 805 can be stored in a quality control ingredient repository.

In some examples, one or more of the quality control ingredients can be shipped in a preconditioned form (e.g., in lyophilized form). In this situation, the quality control ingredients can be prepared for use in the analyzer by a user 807 or by the analyzer itself 808. In one example, the analyzer can be configured to reconstitute a lyophilized quality control ingredient 808 (e.g. to bring a particular matrix in a liquid form).

After the quality control ingredients have been loaded 806 to an analyzer (by a user or automatically by a feeding storing device), the analyzer can be ready to perform the monitoring procedures of the present disclosure.

## Claims

1. A method for monitoring the performance of an analyzer (1; 1') for biological samples having an automated preparation device (5), the method comprising:
receiving an instruction that a monitoring procedure shall be executed;
after receipt of the instruction that a monitoring procedure shall be executed:
obtaining, by the automated preparation device (5), at least two quality control ingredients (21; 22, 23; 24) from a repository (2) including a plurality of quality control ingredients (21; 22, 23; 24);
mixing, by the automated preparation device (5), the at least two quality control ingredients (21; 22, 23; 24) in a sample preparation receptacle (3; 7) to obtain a quality control (31; 32; 33) which mimics the properties of a biological sample to be analyzed by the analyzer (1; 1');
the method further comprising:
determining at least one parameter of the quality control (31; 32; 33); and
determining a status of the analyzer (1, 1') based on the determined parameter of the quality control (31; 32; 33),
wherein one of the at least two quality control ingredients (21; 22, 23; 24) is a matrix (21) and a second one of the quality control ingredients (21; 22, 23; 24) is a modifying agent (22),
characterized either in that:
the modifying agent (22) includes one or more of a drug, a metabolite of a drug, and a substance that accumulates in a predetermined medical or metabolic condition,
or in that:
the matrix (21) is derived from blood plasma or is an artificial substance mimicking properties of blood plasma or blood serum.

2. The method of claim 1, first alternative, wherein the matrix (21) is derived from a bodily fluid or a constituent of a bodily fluid, or wherein the matrix (21) is an artificial substance mimicking properties of a bodily fluid or a constituent of a bodily fluid.

3. The method of claim 1 or 2, first alternative, wherein the matrix (21) is derived from blood plasma or blood serum or is an artificial substance mimicking properties of blood plasma or blood serum.

4. The method of any one of the preceding claims wherein the method further includes mixing the at least two quality control ingredients (21; 22, 23; 24) in a sample preparation receptacle (3; 7) to obtain a further quality control (31; 32; 33) in addition to the previously prepared quality control (31; 32; 33) which mimics the properties of a biological sample to be analyzed by the analyzer (1; 1') and has different properties than the previously prepared quality control (31; 32; 33);
determining at least one parameter of the further quality control (31; 32; 33); and determining a status of the analyzer (1; 1') based on the determined parameters of the further and previously prepared quality controls (31; 32; 33).

5. The method of claim 4 wherein the further and previously prepared quality controls (31; 32; 33) share at least one common matrix (21) or at least one common modifying agent (22), or wherein the further and previously prepared quality controls (31; 32; 33) include at least one different matrix (21) or at least one different modifying agent (22).

6. The method of any one of the preceding claims wherein the monitoring procedure is carried out according to a predetermined schedule.

7. The method of any one of the preceding claims wherein the monitoring procedure is carried out upon receipt of a trigger event, preferably wherein the trigger event includes determining that a predetermined type of biological sample is to be analyzed by the analyzer (1; 1'), that a particular test procedure is to be carried out by the analyzer (1; 1'), that a new lot of reagents is placed in the analyzer and that a particular measurement result has been measured by the analyzer (1; 1').

8. The method of any one of the preceding claims wherein the obtaining, preparing and determining steps are carried out automatically by the analyzer (1; 1').

9. The method of any one of the preceding claims wherein the analyzer is set to a fault state if the determined parameter of the quality control (31; 32; 33) deviates from a target parameter or target parameter range.

10. The method of any one of the preceding aspects 1 to 9 wherein at least one of the quality control ingredients is stored in a liquid form.

11. The method of any one of the preceding aspects wherein the preparation device includes a pipetting system including one or more pipettors.

12. An automated analyzer (1; 1') for analyzing biological samples comprising:
a repository (2) for storing a plurality of quality control ingredients (21; 22; 23; 24) for preparing quality controls (31; 32; 33);
an automated preparation device (5) configured to, after receipt of the instruction that a monitoring procedure shall be executed, obtain at least two quality control ingredients (21; 22; 23; 24) from the repository (2) including a plurality of quality control ingredients (21; 22; 23, 24) and mix the at least two quality control ingredients (21; 22; 23; 24) in a sample preparation receptacle (3; 7) to obtain a quality control (31; 32; 33) which mimics the properties of a biological sample to be analyzed by the analyzer (1; 1');
a measurement device (4) configured to determine at least one parameter of the quality control (31; 32; 33) and to determine a status of the analyzer (1; 1') based on the determined parameter of the quality control (31; 32; 33),
wherein one of the at least two quality control ingredients (21; 22, 23; 24) is a matrix (21) and a second one of the quality control ingredients (21; 22, 23; 24) is a modifying agent (22),
characterized either in that:
the modifying agent (22) includes one or more of a drug, a metabolite of a drug, and a substance that accumulates in a predetermined medical or metabolic condition,
or in that:
the matrix (21) is derived from blood plasma or is an artificial substance mimicking properties of blood plasma or blood serum.

13. The automated analyzer of any one of the preceding claims wherein the repository (2) includes one or more containers including quality control ingredients (21; 22; 23; 24) required to prepare a particular quality control (31; 32; 33).

14. The automated analyzer of any one of the preceding claims wherein the preparation device (5) includes a pipetting system including one or more pipettors.

15. A computer readable medium having instructions stored thereon which when executed by a controller of an analyzer for biological samples as defined in claim 12 cause the analyzer for biological samples to perform the steps of any one of claims 1 to 11.

## Patentansprüche

1. Verfahren zum Überwachen der Leistung eines Analysators (1; 1') für biologische Proben mit einer automatisierten Vorbereitungsvorrichtung (5), wobei das Verfahren umfasst:
Empfangen einer Anweisung, dass ein Überwachungsprozess ausgeführt werden soll;
nach Empfang einer Anweisung, dass ein Überwachungsprozess ausgeführt werden soll:
Erhalten von mindestens zwei Qualitätskontrollbestandteilen (21; 22, 23; 24) aus einem Depot (2), das eine Vielzahl von Qualitätskontrollbestandteilen (21; 22, 23; 24) einschließt, durch die automatisierte Vorbereitungsvorrichtung (5);
Mischen der mindestens zwei Qualitätskontrollbestandteile (21; 22, 23; 24) in einem Probenvorbereitungsgefäß (3; 7) durch die automatisierte Vorbereitungsvorrichtung (5), um eine Qualitätskontrolle (31; 32; 33) zu erhalten, welche die Eigenschaften einer von dem Analysator (1; 1') zu analysierenden biologischen Probe imitiert;
wobei das Verfahren des Weiteren umfasst:
Ermitteln mindestens eines Parameters der Qualitätskontrolle (31; 32; 33); und
Ermitteln eines Status des Analysators (1, 1') basierend auf dem ermittelten Parameter der Qualitätskontrolle (31; 32; 33),
wobei einer der mindestens zwei Qualitätskontrollbestandteile (21; 22, 23; 24) eine Matrix (21) ist und ein zweiter der Qualitätskontrollbestandteile (21; 22, 23; 24) ein Modifizierungsmittel (22) ist,
**dadurch gekennzeichnet, dass** entweder:
das Modifizierungsmittel (22) ein oder mehrere von einem Arzneimittel, einem Metaboliten eines Arzneimittels und einer Substanz einschließt, die in einem vorgegebenen medizinischen oder metabolischen Zustand akkumuliert, oder dass:
die Matrix (21) von Blutplasma abgeleitet ist oder eine künstliche Substanz ist, die Eigenschaften von Blutplasma oder Blutserum imitiert.

2. Verfahren nach Anspruch 1, erste Alternative, wobei die Matrix (21) von einer Körperflüssigkeit oder einem Bestandteil einer Körperflüssigkeit abgeleitet ist, oder wobei die Matrix (21) eine künstliche Substanz ist, welche Eigenschaften einer Körperflüssigkeit oder eines Bestandteils einer Körperflüssigkeit imitiert.

3. Verfahren nach Anspruch 1 oder 2, erste Alternative, wobei die Matrix (21) von Blutplasma oder Blutserum abgeleitet ist oder eine künstliche Substanz ist, die Eigenschaften von Blutplasma oder Blutserum imitiert.

4. Verfahren nach einem der vorhergehenden Ansprüche, wobei das Verfahren des Weiteren Mischen der mindestens zwei Qualitätskontrollbestandteile (21; 22, 23; 24) in einem Probenvorbereitungsgefäß (3; 7) einschließt, um eine weitere Qualitätskontrolle (31; 32; 33) zusätzlich zu der zuvor vorbereiteten Qualitätskontrolle (31; 32; 33) zu erhalten, welche die Eigenschaften einer durch den Analysator (1; 1') zu analysierenden biologischen Probe imitiert und andere Eigenschaften als die zuvor vorbereitete Qualitätskontrolle (31; 32; 33) hat;
Ermitteln mindestens eines Parameters der weiteren Qualitätskontrolle (31; 32; 33); und
Ermitteln eines Status des Analysators (1, 1') basierend auf den ermittelten Parametern der weiteren und der zuvor vorbereiteten Qualitätskontrolle (31; 32; 33).

5. Verfahren nach Anspruch 4, wobei die weitere und die zuvor vorbereitete Qualitätskontrolle (31; 32; 33) mindestens eine gemeinsame Matrix (21) oder mindestens ein gemeinsames Modifizierungsmittel (22) teilen, oder wobei die weitere und zuvor vorbereitete Qualitätskontrolle (31; 32; 33) mindestens eine unterschiedliche Matrix (21) oder mindestens ein unterschiedliches Modifizierungsmittel (22) einschließen.

6. Verfahren nach einem der vorhergehenden Ansprüche, wobei der Überwachungsprozess gemäß einem vorgegebenen Schema durchgeführt wird.

7. Verfahren nach einem der vorhergehenden Ansprüche, wobei der Überwachungsprozess nach Empfang eines Triggerereignisses durchgeführt wird, wobei das Triggerereignis vorzugsweise Ermitteln, dass ein vorgegebener Typ von biologischer Probe durch den Analysator (1; 1') analysiert werden soll, dass ein bestimmter Testprozess durch den Analysator (1; 1') durchgeführt werden soll, dass eine neue Charge von Reagenzien in dem Analysator platziert worden ist, und dass ein bestimmtes Messergebnis durch den Analysator (1; 1') gemessen worden ist, einschließt.

8. Verfahren nach einem der vorhergehenden Ansprüche, wobei die Schritte zum Erhalten, Vorbereiten und Ermitteln automatisch durch den Analysator (1; 1') durchgeführt werden.

9. Verfahren nach einem der vorhergehenden Ansprüche, wobei der Analysator auf einen Fehlerstatus gesetzt wird, falls der ermittelte Parameter der Qualitätskontrolle (31; 32; 33) von einem Zielparameter oder Zielparameterbereich abweicht.

10. Verfahren nach einem der vorhergehenden Aspekte 1 bis 9, wobei mindestens einer der Qualitätskontrollbestandteile in einer flüssigen Form verwahrt wird.

11. Verfahren nach einem der vorhergehenden Aspekte, wobei die Vorbereitungsvorrichtung ein Pipettiersystem einschließt, das eine oder mehrere Pipettierhilfen einschließt.

12. Automatisierter Analysator (1; 1') zum Analysieren von biologischen Proben, umfassend:
ein Depot (2) zum Verwahren einer Vielzahl von Qualitätskontrollbestandteilen (21; 22; 23; 24) zur Vorbereitung von Qualitätskontrollen (31; 32; 33);
eine automatisierte Vorbereitungsvorrichtung (5), die ausgestaltet ist, um nach Empfang der Anweisung, dass ein Überwachungsprozess ausgeführt werden soll,
mindestens zwei Qualitätskontrollbestandteile (21; 22; 23; 24) von dem Depot (2) zu erhalten, das eine Vielzahl von Qualitätskontrollbestandteilen (21; 22; 23, 24) einschließt, und die mindestens zwei Qualitätskontrollbestandteile (21; 22; 23; 24) in einem Probenvorbereitungsgefäß (3; 7) zu mischen, um eine Qualitätskontrolle (31; 32; 33) zu erhalten, welche die Eigenschaften einer durch den Analysator (1; 1') zu analysierenden biologischen Probe imitiert;
eine Messvorrichtung (4), die ausgestaltet ist, um mindestens einen Parameter der Qualitätskontrolle (31; 32; 33) zu ermitteln und einen Status des Analysators (1; 1') basierend auf dem ermittelten Parameter der Qualitätskontrolle (31; 32; 33) zu ermitteln,
wobei einer der mindestens zwei Qualitätskontrollbestandteile (21; 22, 23; 24) eine Matrix (21) ist und ein zweiter der Qualitätskontrollbestandteile (21; 22, 23; 24) ein Modifizierungsmittel (22) ist,
**dadurch gekennzeichnet, dass** entweder:
das Modifizierungsmittel (22) ein oder mehrere von einem Arzneimittel, einem Metaboliten eines Arzneimittels und einer Substanz einschließt, die in einem vorgegebenen medizinischen oder metabolischen Zustand akkumuliert, oder dass:
die Matrix (21) von Blutplasma abgeleitet ist oder eine künstliche Substanz ist, die Eigenschaften von Blutplasma oder Blutserum imitiert.

13. Automatisierter Analysator nach einem der vorhergehenden Ansprüche, wobei das Depot (2) einen oder mehrere Behälter einschließt, die Qualitätskontrollbestandteile (21; 22; 23; 24) einschließen, die zur Vorbereitung einer bestimmten Qualitätskontrolle (31; 32; 33) erforderlich sind.

14. Automatisierter Analysator nach einem der vorhergehenden Ansprüche, wobei die Vorbereitungsvorrichtung (5) ein Pipettiersystem einschließt, das eine oder mehrere Pipettierhilfen einschließt.

15. Computerlesbares Medium, auf dem Anweisungen gespeichert sind, die bei Ausführung durch eine Steuerung eines Analysators für biologische Proben, wie in Anspruch 12 definiert, bewirken, dass der Analysator für biologische Proben die Schritte gemäß einem der Ansprüche 1 bis 11 durchführt.

## Revendications

1. Procédé permettant de surveiller les performances d'un analyseur (1 ; 1') pour des échantillons biologiques comportant un dispositif de préparation automatisé (5), le procédé comprenant :
la réception d'une instruction selon laquelle une procédure de surveillance doit être exécutée ;
après réception de l'instruction selon laquelle une procédure de surveillance doit être exécutée :
l'obtention, par le dispositif de préparation automatisé (5), d'au moins deux ingrédients de contrôle qualité (21; 22, 23; 24) en provenance d'un dépôt (2) comprenant une pluralité d'ingrédients de contrôle qualité (21 ; 22, 23 ; 24) ;
le mélange, par le dispositif de préparation automatisé (5), des au moins deux ingrédients de contrôle qualité (21; 22, 23; 24) dans un réservoir (3; 7) de préparation d'échantillons pour obtenir un contrôle qualité (31 ; 32 ; 33) qui imite les propriétés d'un échantillon biologique devant être analysé par l'analyseur (1 ; 1');
le procédé comprenant en outre :
la détermination d'au moins un paramètre du contrôle qualité (31 ; 32 ; 33) ; et
la détermination d'un état de l'analyseur (1, 1') sur la base du paramètre déterminé du contrôle qualité (31 ; 32 ; 33),
dans lequel un des au moins deux ingrédients de contrôle qualité (21 ; 22, 23 ; 24) est une matrice (21) et un second des ingrédients de contrôle qualité (21 ; 22, 23 ; 24) est un agent de modification (22),
caractérisé soit en ce que :
l'agent de modification (22) comprend un médicament et/ou un métabolite d'un médicament et/ou une substance qui s'accumule dans une pathologie médicale ou métabolique prédéfinie,
soit en ce que :
la matrice (21) est dérivée de plasma sanguin ou est une substance artificielle imitant les propriétés du plasma sanguin ou du sérum sanguin.

2. Procédé selon la revendication 1, première variante, dans lequel la matrice (21) est dérivée d'un liquide corporel ou d'un constituant d'un liquide corporel, ou dans lequel la matrice (21) est une substance artificielle imitant les propriétés d'un liquide corporel ou d'un constituant d'un liquide corporel.

3. Procédé selon la revendication 1 ou 2, première variante, dans lequel la matrice (21) est dérivée de plasma sanguin ou de sérum sanguin ou est une substance artificielle imitant les propriétés du plasma sanguin ou du sérum sanguin.

4. Procédé selon l'une quelconque des revendications précédentes, le procédé comprenant en outre le mélange des au moins deux ingrédients de contrôle qualité (21 ; 22, 23 ; 24) dans un réservoir (3 ; 7) de préparation d'échantillons pour obtenir un contrôle qualité (31 ; 32 ; 33) supplémentaire en plus du contrôle qualité précédemment préparé (31; 32; 33) qui imite les propriétés d'un échantillon biologique devant être analysé par l'analyseur (1 ; 1') et a des propriétés différentes de celles du contrôle qualité précédemment préparé (31 ; 32 ; 33) ;
la détermination d'au moins un paramètre du contrôle qualité (31; 32; 33) supplémentaire ; et
la détermination d'un état de l'analyseur (1 ; 1') sur la base des paramètres déterminés des contrôles qualité supplémentaire et précédemment préparé (31 ; 32 ; 33).

5. Procédé selon la revendication 4 dans lequel les contrôles qualité supplémentaire et précédemment préparé (31 ; 32 ; 33) partagent au moins une matrice (21) commune ou au moins un agent de modification (22) commun, ou dans lequel les contrôles qualité supplémentaire et précédemment préparé (31 ; 32; 33) comprennent au moins une matrice (21) différente ou au moins un agent de modification (22) différent.

6. Procédé selon l'une quelconque des revendications précédentes dans lequel la procédure de surveillance est réalisée en fonction d'un planning prédéfini.

7. Procédé selon l'une quelconque des revendications précédentes dans lequel la procédure de surveillance est réalisée dès la réception d'un événement déclencheur, de préférence dans lequel l'événement déclencheur comprend la détermination établissant qu'un type prédéfini d'échantillon biologique doit être analysé par l'analyseur (1 ; 1'), qu'une procédure de test particulière doit être réalisée par l'analyseur (1 ; 1'), qu'un nouveau lot de réactifs est placé dans l'analyseur et qu'un résultat de mesure particulier a été mesuré par l'analyseur (1 ; 1').

8. Procédé selon l'une quelconque des revendications précédentes dans lequel les étapes d'obtention, de préparation et de détermination sont réalisées automatiquement par l'analyseur (1 ; 1').

9. Procédé selon l'une quelconque des revendications précédentes dans lequel l'analyseur est paramétré sur un état par défaut si le paramètre déterminé du contrôle qualité (31 ; 32 ; 33) s'écarte d'un paramètre cible ou d'une plage de paramètres cible.

10. Procédé selon l'une quelconque des aspects 1 à 9 précédents dans lequel au moins un des ingrédients de contrôle qualité est stocké sous forme liquide.

11. Procédé selon l'un quelconque des aspects précédents dans lequel le dispositif de préparation comprend un système de pipetage comprenant une ou plusieurs pipettes.

12. Analyseur automatisé (1; 1') destiné à analyser des échantillons biologiques comprenant :
un dépôt (2) destiné à stocker une pluralité d'ingrédients de contrôle qualité (21 ; 22 ; 23 ; 24) pour préparer des contrôles qualité (31 ; 32 ; 33) ;
un dispositif de préparation automatisé (5) configuré pour, après réception de l'instruction selon laquelle une procédure de surveillance doit être exécutée, obtenir au moins deux ingrédients de contrôle qualité (21 ; 22 ; 23 ; 24) en provenance du dépôt (2) comprenant une pluralité d'ingrédients de contrôle qualité (21 ; 22 ; 23 ; 24) et mélanger les au moins deux ingrédients de contrôle qualité (21 ; 22 ; 23 ; 24) dans un réservoir (3 ; 7) de préparation d'échantillons pour obtenir un contrôle qualité (31 ; 32 ; 33) qui imite les propriétés d'un échantillon biologique devant être analysé par l'analyseur (1 ; 1');
un dispositif de mesure (4) configuré pour déterminer au moins un paramètre du contrôle qualité (31 ; 32 ; 33) et pour déterminer un état de l'analyseur (1 ; 1') sur la base du paramètre déterminé du contrôle qualité (31 ; 32 ; 33),
dans lequel un des au moins deux ingrédients de contrôle qualité (21 ; 22, 23 ; 24) est une matrice (21) et un second des ingrédients de contrôle qualité (21 ; 22, 23 ; 24) est un agent de modification (22),
caractérisé soit en ce que :
l'agent de modification (22) comprend un médicament et/ou un métabolite d'un médicament et/ou une substance qui s'accumule dans une pathologie médicale ou métabolique prédéfinie,
soit en ce que :
la matrice (21) est dérivée de plasma sanguin ou est une substance artificielle imitant les propriétés du plasma sanguin ou du sérum sanguin.

13. Analyseur automatisé selon l'une quelconque des revendications précédentes dans lequel le dépôt (2) comprend un ou plusieurs contenants comprenant des ingrédients de contrôle qualité (21; 22; 23; 24) nécessaires à la préparation d'un contrôle qualité (31 ; 32 ; 33) particulier.

14. Analyseur automatisé selon l'une quelconque des revendications précédentes dans lequel le dispositif de préparation (5) comprend un système de pipetage comprenant une ou plusieurs pipettes.

15. Support lisible par ordinateur sur lequel sont mémorisées des instructions qui, lorsqu'elles sont exécutées par un organe de commande d'un analyseur pour des échantillons biologiques selon la revendication 12, amènent l'analyseur pour des échantillons biologiques à réaliser les étapes selon l'une quelconque des revendications 1 à 11.
